# DEMANDE DE BREVET EUROPEEN

(11) **EP 2 256 358 A1**
(43) Date de publication de la demande: **01.12.2010**
(21) Numéro de dépôt: 10164184.3
(22) Date de dépôt: 27.05.2010
(51) Int. Cl.: F16D 23/04

(54) **Boîte de vitesses équipée d'un synchroniseur avec passage en couple contrôlé**

(30) Priorité: 29.05.2009 FR 0953551
(71) Demandeur: Peugeot Citroën Automobiles SA, 78140 Vélizy-Villacoublay (FR)
(72) Inventeur: Wascheul, Michael, 78260 Achères (FR)

(57) **Abrégé**

L'invention concerne une boîte de vitesses, comportant un dispositif élastique (17), ledit dispositif élastique formant une lame ressort (35), ladite lame ressort étant formée par un anneau plat (30) et par une patte (18) élastique radiale inclinée. L'anneau est placé autour de l'arbre sur lequel est placé un moyeu (12) contre une face d'une jupe (22) formée par le moyeu. La patte radiale forme une surface d'appui (46) élastique qui s'étend à partir d'une périphérie (44) de l'anneau tout en étant logée dans une lumière traversante (25) formée au travers de la jupe du moyeu, les bagues étant placées en appui contre cette patte par une face opposée de la jupe du moyeu.

## Description

L'invention concerne une boîte de vitesses équipée d'un dispositif de synchronisation pour boîte de vitesses appelé également synchroniseur. Par synchroniseur, on entend un super synchroniseur c'est-à-dire un synchroniseur à haute capacité énergétique.

L'invention a pour but d'améliorer les performances des boîtes de vitesses pilotées à passage de vitesse sous couple.

L'invention trouve une application particulièrement avantageuse dans le domaine des boîtes de vitesses mécaniques pilotées pour véhicule automobile. Toutefois, l'invention peut également être mise en oeuvre avec les véhicules à deux roues motorisés.

Les véhicules comportent une chaîne de traction formée par un organe de propulsion (formé par un moteur thermique et/ou machine électrique), un embrayage, et une boîte de vitesses qui entraîne les roues du véhicule. L'embrayage est relié d'une part à l'organe de propulsion et d'autre part à la boîte de vitesses, elle-même reliée aux roues du véhicule.

Une boîte de vitesses comporte un arbre primaire reliée à l'embrayage et un arbre secondaire relié aux roues du véhicule, ces deux arbres étant reliés entre eux par l'intermédiaire d'engrenages formant autant de rapports de démultiplication de vitesses que de rapports de vitesses.

Chaque engrenage comporte un moyeu lié en rotation à un des arbres, une roue liée en rotation à l'autre arbre et un pignon fou monté fou sur l'arbre sur lequel est monté le moyeu. Lorsque l'engrenage est sollicité, le moyeu et le pignon s'accouplent. Le moyeu et le pignon fou sont entraînés en rotation l'un avec l'autre de façon à entraîner en rotation les roues du véhicule. Suivant le diamètre de la roue, l'arbre secondaire (et donc les roues du véhicule) est entraîné en rotation avec une vitesse qui dépend du diamètre de la roue sollicité par cet engrenage.

Pour que l'accouplement du moyeu avec le pignon fou puisse se faire, il faut d'abord obtenir une synchronisation de la vitesse de rotation de l'arbre sur lequel est monté la roue avec la vitesse de rotation de l'autre arbre sur lequel est monté le moyeu. Pour cela, un synchroniseur ou dispositif de synchronisation est interposé entre le moyeu et le pignon fou. Ce dispositif de synchronisation est formé par des bagues de friction coniques qui coopèrent avec le moyeu et avec le pignon fou afin de lier en rotation le moyeu avec le pignon fou. Le pignon fou étant entraîné en rotation par la roue, la liaison en rotation du moyeu avec le pignon fou permet l'entraînement en rotation de la roue par le moyeu.

Plus précisément, les bagues de friction sont formées par au moins un stator lié en rotation au moyeu et par au moins un rotor, lié en rotation au pignon fou. La plupart des synchroniseurs comporte n stators et n rotors. Ces bagues sont disposées les unes à l'intérieur des autres en respectant une alternance rotors/stators. Le moyeu et le pignon fou associés à un rapport de vitesse donné sont indépendants l'un de l'autre lorsque ledit rapport de vitesse donné n'est pas sollicité. Dans ce cas, les stators et les rotors ne se touchent pas. Les stators sont liés en rotation au moyeu et sont donc entraînés en rotation en même temps que le moyeu. Les rotors sont liés en rotation au pignon fou, le pignon fou étant lié en rotation à la roue, les rotors sont entraînés ou non en rotation par la roue. Les rotors sont entraînés en rotation lorsque le véhicule est en déplacement. Les rotors sont statiques lorsque le véhicule est à l'arrêt, le moteur en marche ou non.

Il y a synchronisation des vitesses de rotation du moyeu et du pignon fou et couplage du moyeu avec le pignon fou lorsque les différentes bagues se frottent les unes contre les autres jusqu'à elles soient solidarisées les unes avec les autres. Pour que le frottement se produise, un manchon baladeur est déplacé vers les bagues de manière à ce que les bagues glissent les unes à la suite des autres et que des frottements se produisent entraînant la synchronisation progressive du moyeu avec le pignon fou. Le manchon est disposé autour du moyeu et est en liaison glissière avec le moyeu. Ce manchon est commandé de manière connue par un mécanisme d'entraînement de type fourchette et d'un actionneur, par exemple hydraulique ou électrique.

Le dispositif de synchronisation permet la synchronisation nécessaire au passage d'un rapport de vitesse, tout en transmettant un couple au pignon fou pendant ce passage (passage sous couple).

Le manchon est lié en rotation au moyeu mais est mobile axialement pour permettre l'accrochage avec le pignon fou. On parle de crabotage lorsque le manchon entre en coopération avec le pignon fou de sorte qu'un rapport de vitesse est engagé, et de décrabotage lorsque le manchon se dégage du pignon fou de sorte que le rapport est désengagé.

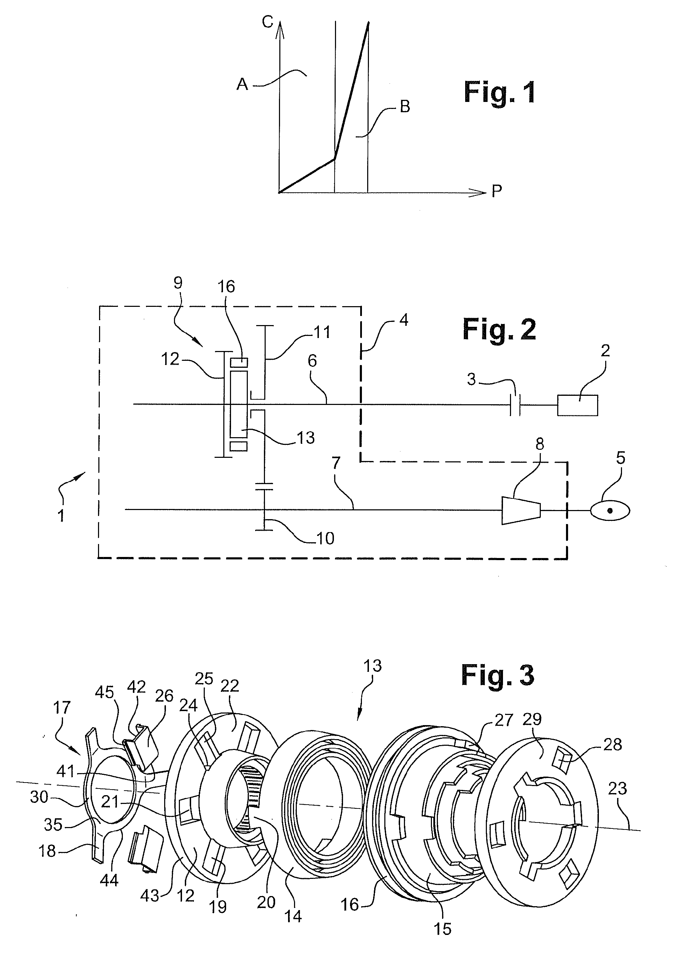

La figure 1 représente le couple C exercé entre le moyeu et le pignon fou en fonction d'une montée d'une pression P. La pression P est la montée en effort sur le super synchroniseur, via la fourchette et le piston de commande. La pression d'huile est délivrée par l'actionneur de passage de vitesses (accumulateur de pression 35 à 45 Bars), via une électrovanne au piston de commande.

Dès que le contact entre chaque bague est établi en A, le dispositif de synchronisation présente une efficacité importante. Pendant toute la phase du début de l'empilage des bagues et du rattrapage de la garde au léchage, la montée en pression est progressive puis lorsque le passage du couple est effectif en B, le couple est très élevé très rapidement. Par rattrapage de la garde au léchage, on entend le rattrapage du jeu de fonctionnement en position de repos du supersynchroniseur pour éviter tout frottement intempestif en position repos

Mais cette montée en couple, très importante et rapide engendre des difficultés de pilotage, notamment des difficultés de régulation de pression.

Il est donc nécessaire de prévoir une montée progressive du couple.

Il est connu du document FR 2 815 682 un synchroniseur pour boîte de vitesses comportant un pignon, un cône male et un cône femelle de synchronisation, une bague de synchronisation, un moyeu et un manchon. Un anneau élastique est interposé entre la bague de synchronisation et le moyeu. Cet anneau a pour fonction de transmettre à la bague de synchronisation une sollicitation élastique axiale lors du déplacement du manchon en direction de la bague, de sa position de repos jusqu'à sa position d'engagement. Lors de ce mouvement, le ressort annulaire appuie axialement sur la bague, laquelle appuie à son tour le cône femelle sur le cône male, ces cônes accouplant alors en rotation, de façon progressive et sélective, le pignon et la bague de synchronisation.

Il est connu également du document FR 2 804 187 un autre synchroniseur pour boîte de vitesses qui comporte une rondelle élastique. Cette rondelle élastique permet d'écarter les anneaux de synchronisation en position de repos.

Le problème posé par ces types d'anneaux élastiques ou de rondelles élastiques est que le matériau plastique utilisé est fragile et qu'au bout d'un certain nombre d'utilisation, il devient défectueux, et peut même se rompre. Il est alors nécessaire de remplacer cet élément élastique.

L'invention a pour but de remédier à ces problèmes en rendant la montée en couple la plus progressive possible tout en évitant les inconvénients liés à l'utilisation des anneaux élastiques de l'état de la technique.

Dans l'invention, il est prévu de faire fonctionner les bagues de friction les unes après les autres, tout en élargissant la zone de passage de couple, plutôt que de faire fonctionner l'ensemble des bagues comme c'est le cas des synchroniseurs de l'état de la technique. Ceci permet d'apporter une progressivité dans le passage du couple. Au début du fonctionnement, la bague extérieure n°1 entre en contact avec celle juste en dessous ou bague n°2, ce qui permet de transmettre un couple limité avant que cette bague n°2 n'entre en contact avec la bague suivante ou bague n° 3, et ainsi de suite. Ceci permet donc d'établir l'efficacité de façon progressive.

Pour ce faire, dans l'invention il est prévu une surface inclinée contre laquelle sont placées en appui les bagues de friction. L'inclinaison de la surface s'effectue selon un cône dont la section de plus petit diamètre est située proche du moyeu et la section de plus grand diamètre est située éloignée du moyeu. Cette surface inclinée peut être périphérique ou partiellement périphérique.

Cette surface est inclinée par rapport à un plan qui est perpendiculaire par rapport à un axe d'allongement de l'arbre sur lequel sont placées les bagues.

Les bagues sont placées en appui contre cette surface inclinée de telle manière que les bagues soient situées les unes à la suite des autres tout en étant décalées le long de l'axe d'allongement de l'arbre sur lequel sont placées les bagues.

De cette façon, les bagues glissent les unes à la suite des autres et ce de façon très progressive. Le degré d'inclinaison de la surface d'appui des bagues est calculé de façon à obtenir le résultat souhaité.

Les bagues sont placées en appui élastiquement contre la surface inclinée. On désapparie les angles des bagues des synchroniseurs ou du super synchroniseur (rotos et stators) afin d'obtenir un écartement naturel de ceux-ci au repos.

Plus précisément, dans l'invention il est prévu une lame ressort formant un anneau plat et au moins une patte radiale élastique. L'anneau est placé autour de l'arbre sur lequel est monté le moyeu et la patte s'étend radialement à partir d'une périphérie externe de l'anneau tout en étant inclinée.

Cette patte forme la surface inclinée contre laquelle sont placées en appui les bagues coniques.

Ainsi, selon un exemple de l'invention, les bagues sont décalées les unes par rapport aux autres de telle manière que la bague de plus grand diamètre est plus éloignée du moyeu par rapport à la bague qui est de plus faible diamètre.

Ainsi, un empilage progressif des bagues est possible de manière à obtenir un passage de couple progressif. Les bagues se frottent les unes contre les autres progressivement en fonction de leur ordre de décalage les unes par rapport aux autres. Plus l'angle d'inclinaison de la patte sera élevé, plus la solidarisation de toutes les bagues entre elles s'effectuera lentement et donc de plus en plus progressivement.

L'invention permet de rendre le couplage du moyeu avec le pignon fou plus progressif par rapport à un même type de couplage pour les synchroniseurs de l'état de la technique.

L'invention a donc pour objet une boîte de vitesses, comprenant
- un arbre primaire relié à un moteur et un arbre secondaire relié aux roues du véhicule, ces deux arbres étant reliés entre eux par des engrenages formant respectivement des rapports de vitesse, ces engrenages comportant chacun une roue solidaire en rotation d'un des arbres et un pignon fou monté sur l'autre arbre qui engrènent entre eux, et
- un moyeu monté fixe en rotation sur l'arbre sur lequel est monté le pignon fou,
- un dispositif de synchronisation pour synchroniser la vitesse de rotation de l'arbre primaire avec celle de l'arbre secondaire, le dispositif de synchronisation comprenant des bagues de friction coniques disposées entre le moyeu et le pignon fou, lesdites bagues étant formées par un stator lié en rotation au moyeu et par un rotor lié en rotation au pignon fou, le stator et le rotor étant disposés concentriquement l'un à l'intérieur de l'autre, et le dispositif de synchronisation comprenant un manchon en liaison glissière avec le moyeu, ce manchon permettant d'exercer un effort axial sur la bague de plus grand diamètre, afin de générer un couple par friction du stator et du rotor entraînant en rotation le pignon fou avec le moyeu,

- un dispositif élastique permettant un accouplement progressif du stator avec le rotor, **caractérisée en ce que**
- le dispositif élastique forme une lame ressort, ladite lame ressort étant formée par une anneau plat et par une patte élastique radiale inclinée, ledit anneau étant placé autour de l'arbre sur lequel est placé le moyeu contre une face d'une jupe formée par le moyeu et la patte radiale formant une surface d'appui élastique qui s'étend à partir d'une périphérie de l'anneau tout en étant logée dans une lumière traversante formée au travers de la jupe du moyeu, les bagues étant placées en appui contre cette patte par une face opposée de la jupe du moyeu.

L'invention comporte l'une quelconque des caractéristiques suivantes :
- la lame ressort forme plusieurs pattes réparties régulièrement autour d'une périphérie externe de l'anneau.
- la lame ressort comporte trois pattes élastiques coopérant avec les bagues de friction.
- le dispositif élastique comporte également un doigt de poussée situé entre les bagues et la lame ressort, la patte de la lame ressort étant logée en appui dans le doigt de poussée, ledit doigt de poussée formant une autre surface d'appui inclinée contre laquelle sont placées en appui les bagues de friction.
- le dispositif élastique comporte autant de doigts de poussée que de pattes.

L'invention concerne également un dispositif élastique d'une boîte de vitesses précédemment mentionnée, **caractérisé en ce qu**'il forme une lame ressort formée par un anneau plat et par une patte élastique s'étendant radialement à une périphérie externe de l'anneau, ladite patte formant une surface d'appui inclinée contre laquelle sont placées en appui les bagues de friction.

L'invention concerne enfin un dispositif de synchronisation d'une boîte de vitesses telle que précédemment mentionnée qui comporte le dispositif élastique tel que précédemment mentionné.

L'invention sera mieux comprise à la lecture de la description qui suit et à l'examen des figures qui l'accompagnent. Celles-ci ne sont présentées qu'à titre indicative et nullement limitative de l'invention. Les figures montrent :
- Figure 2 : Une représentation schématique d'une chaîne de traction d'un véhicule, selon l'invention ;
- Figure 3 : Une représentation tridimensionnelle schématique en éclatée d'un dispositif de synchronisation, selon l'invention ;
- Figure 4 : Une représentation d'une vue en coupe longitudinale d'un dispositif de synchronisation, selon l'invention ;
- Figure 5 : Une vue en coupe agrandie partielle du dispositif de synchronisation selon la figure 4, et
- Figure 6 : Une représentation graphique d'un couple obtenu entre un moyeu et un pignon fou en fonction de la pression exercée, selon l'invention.

La figure 2 illustre une chaîne 1 de traction d'un véhicule automobile formée par un moteur 2 thermique, un embrayage 3, une boîte de vitesses 4 (délimitée par une ligne fermée discontinue), dont la sortie est couplée aux roues 5 du véhicule. L'embrayage 3 est relié, d'une part, au moteur thermique 2 et, d'autre part, à l'entrée de la boîte de vitesses 4.

La boîte de vitesses 4 est formée par un arbre primaire 6 et par un arbre secondaire 7. L'arbre primaire 6 est relié au moteur 2 et l'arbre secondaire 7 est relié aux roues 5 du véhicule. Un différentiel 8 assure une liaison entre l'arbre secondaire 7 et les roues du véhicule 5. L'arbre primaire 6 et l'arbre secondaire 7 sont reliés entre eux par au moins un engrenage 9 formant un rapport de vitesse.

Chaque engrenage 9 comporte chacun une roue 10 solidaire en rotation d'un arbre et un pignon fou 11 monté sur l'autre arbre, la roue 10 et le pignon fou 11 engrenant entre eux. Dans l'exemple de la figure 2, la roue 10 est montée solidaire en rotation sur l'arbre secondaire 7 et le pignon fou 11 est monté fou sur l'arbre primaire 6 et est lié en rotation par engrenage à la roue 10. L'engrenage 9 comporte également un moyeu 12 monté fixe en rotation sur l'arbre sur lequel est monté le pignon fou 11. D'après l'exemple illustré figure 2, le moyeu 12 est fixé en rotation sur l'arbre primaire 6.

Chaque engrenage comporte également un dispositif de synchronisation 13 pour synchroniser la vitesse de rotation de l'arbre primaire 6 avec celle de l'arbre secondaire 7. Ainsi, le moyeu 12 et le pignon fou 11 peuvent s'accoupler afin que le moteur via l'arbre primaire 6 et le moyeu 12 accélère ou décélère la vitesse du véhicule par augmentation ou diminution de la vitesse de rotation de l'arbre secondaire 7 via le pignon fou 11 et la roue 10.

Figure 3, le dispositif de synchronisation 13 comprend des bagues de friction coniques 14 et 15 disposées entre le moyeu 12 et le pignon fou 11. Ces bagues 14,15 sont formées par au moins un stator 14 lié en rotation au moyeu 12 et par au moins un rotor 15 lié en rotation au pignon fou 11. Dans l'exemple illustré, le dispositif de synchronisation 13 comporte autant de stators 14 que de rotors 15. Plus précisément, le dispositif de synchronisation 13 comporte trois stators 14 et trois rotors 15. Dans un autre exemple non illustré, le dispositif de synchronisation 13 peut comporter n stators 14 et n-1 rotors 15.

Les stators 14 et les rotors 15 sont disposés concentriquement les uns à l'intérieur des autres, en respectant une alternance stator/rotor du moyeu 12 vers le pignon 11.

Les stators 14 sont liés en rotation au moyeu 12 par au moins un organe d'entraînement 20 formé par chacun des stators 14. Les rotors 15 sont liés en rotation au pignon fou 11 par au moins un autre organe d'entraînement 27 formé par chacun des rotors. L'organe d'entraînement 20 est logé dans une ouverture 21 formée au travers d'une jupe 22 du moyeu 12 assurant ainsi un maintien en rotation des stators 14 par rapport au moyeu 12. La jupe 22 est périphérique et plane. La jupe 22 s'étend dans un plan qui est perpendiculaire à un axe 23 d'allongement de l'arbre recevant le dispositif de synchronisation 13. Il y a autant d'ouvertures 21 qu'il y a d'organe d'entrainement 20 pour un stator 14 donné. L'autre organe d'entrainement 27 est logé dans une fente 28 formée au travers d'un flasque 29 lié en rotation au pignon fou 11 assurant également un maintien en rotation des rotors 15 par rapport au pignon fou 11. Le flasque 29 est situé dans un plan qui est perpendiculaire à l'axe 23 d'allongement. Comme pour les stators 14, il y a autant de fentes 28 qu'il y a d'autres organes d'entraînement 27 pour un rotor 15 donné.

Lorsque le véhicule est à l'arrêt, moteur arrêté, aucun rapport de vitesse n'est engagé. Le pignon 11 n'est pas accouplé au moyeu 12, le moyeu 12 et les stators 14 d'une part, le pignon 11 et les rotors 15 d'autre part, sont statiques.

Lorsque le véhicule est à l'arrêt, moteur en marche, aucun rapport de vitesse n'est engagé. Le pignon 11 n'est pas accouplé au moyeu 12, le moyeu 12 et les stators 14 tournent alors que le pignon 11 et les rotors 15 sont statiques.

Lorsque le véhicule est en déplacement, le moteur en marche, un rapport de vitesse est engagé. Les bagues sont amenées au contact les unes par rapport aux autres suivant leur ordre de positionnement les unes par rapport aux autres. Les stators 14 et les rotors 15 sont liés en rotation et tournent à la même vitesse. C'est la synchronisation.

Le dispositif de synchronisation 13 comprend également un manchon 16 qui est disposé en liaison glissière avec le moyeu 12. Ce manchon 16 permet d'exercer un effort axial sur le stator 14 de plus grand diamètre, afin de générer un couple par friction de l'ensemble des stators 14 et des rotors 15 entraînant en rotation le pignon fou 11 avec le moyeu 12. Ce manchon 16 est commandé de manière connue par un mécanisme d'entraînement de type fourchette et d'un actionneur, par exemple hydraulique ou électrique. Le manchon 16 est lié en rotation au moyeu 12 mais est mobile axialement pour permettre l'accrochage du moyeu 12 avec le pignon fou 11.

Lorsque tous les stators 14 et les rotors 15 sont liés les uns avec les autres par friction, le pignon fou 11 s'accouple au moyeu 12 par crabotage ou autre mécanisme d'accrochage. La vitesse de rotation de l'arbre secondaire 7 est donc liée à la vitesse de rotation de l'arbre primaire 6. La vitesse de rotation des roues est alors liée à la vitesse de rotation du moteur. Lorsque le moteur ralenti, la vitesse de rotation des roues est ralentie pour obtenir une décélération du véhicule. Lorsque le moteur accélère, la vitesse de rotation augmente pour obtenir une accélération du véhicule.

La boîte de vitesses 4 comporte également un dispositif élastique 17. Ce dispositif élastique 17 permet un accouplement progressif des stators 14 avec les rotors 15.

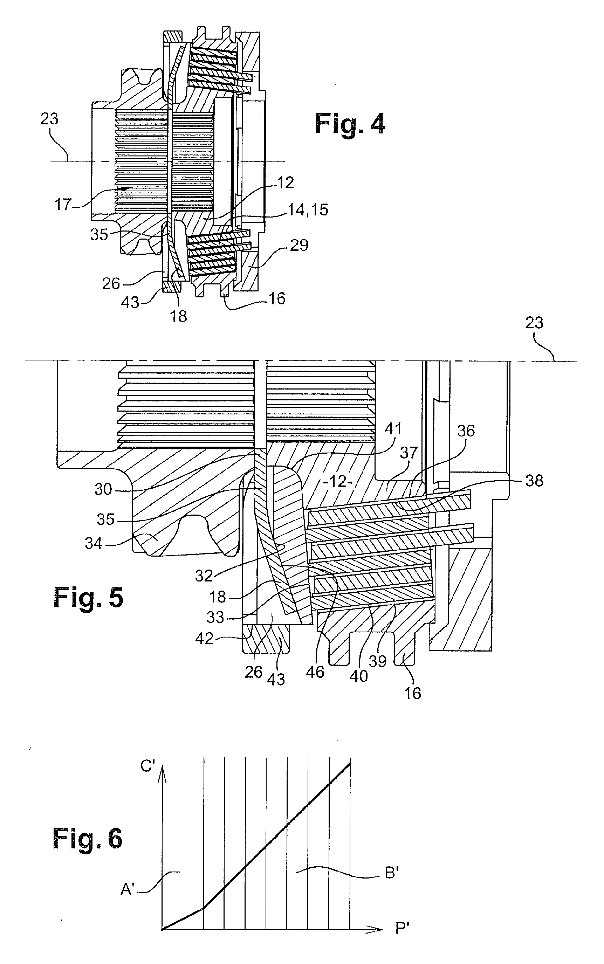

Selon l'invention, le dispositif élastique 17 forme une lame ressort 35 qui est montée fixe en rotation sur le moyeu 12, figures 3, 4 et 5. La lame ressort 35 est maintenue en appui contre le moyeu 12 par l'intermédiaire de moyens de calage 34, tel que par exemple un pignon moteur 34, figures 4 et 5.

La lame ressort 35 forme un anneau plat 30 et au moins une patte 18 élastique inclinée selon une direction radiale, figures 3, 4 et 5. L'anneau 30 est placé autour de l'arbre sur lequel est placé le moyeu 12 contre une face de la jupe 22 formée par le moyeu 12.

La patte radiale 18 forme une première surface 46 d'appui élastique qui s'étend radialement à partir d'une périphérie externe 44 de l'anneau 30 et en direction opposée à l'arbre sur lequel est montée la lame ressort 35, figure 3. La périphérie externe 44 de l'anneau 30 est située à un endroit de l'anneau 30 le plus éloigné de l'arbre sur lequel est monté la lame ressort 35. La patte 18 est logée dans une lumière traversante 25 formée au travers de la jupe 22 du moyeu 12. C'est contre cette première surface 46 que les bagues peuvent être placées directement en appui élastiquement.

La lame ressort 35 présente plusieurs pattes radiales 18 régulièrement reparties autour de l'anneau formé par le dispositif élastique 17. Dans l'exemple particulier de l'invention, figure 3, la lame ressort 35 comporte trois pattes radiales 18 réparties tous les 120°. Le moyeu 12 comporte à cet effet trois lumières 25 traversantes destinées à recevoir ces pattes radiales 18. Ces lumières 25 sont situées entre les ouvertures 21 formées au travers du moyeu 12 pour recevoir les organes d'entraînement 20 des stators 14. Les lumières 25 sont réparties selon le même schéma que les pattes 18 de l'exemple préféré

Les lumières 25 et les ouvertures 21 sont situées à des endroits différents. Plus particulièrement les lumières 25 et les ouvertures 21 sont formées les unes à la suite des autres en respectant une alternance lumière/ouverture.

Le dispositif élastique 17 peut également comporter au moins un doigt de poussée 26, figures 3, 4 et 5. Dans l'exemple préféré il y a autant de doigt de poussée 26 qu'il y a de patte 18. Ce doigt de poussée 26 est interposé entre les bagues 14-15 et la lame ressort 35. Ce doigt de poussée 26 forme un U en coupe transversale. Il est placé à l'intérieur de la lumière 25 du moyeu 12. Les extrémités supérieures du U forment chacune une aile 45, figure 3. Les ailes 45 de ces extrémités s'étendent en direction opposée l'une de l'autre. Le doigt de poussée 26 est placé avec ses ailes 45 placées en appui contre un rebord périphérique de l'ouverture 25.

Figure 5, le doigt de poussée 26 forme une deuxième surface d'appui 32 inclinée contre laquelle est placée en appui la patte radiale 18 de la lame ressort 35. Le doigt de poussée 26 forme également une troisième surface d'appui 33 inclinée contre laquelle sont placées au contact direct les stators 14 et les rotors 15. Plus précisément, la surface latérale de chacune des bagues est placée en appui contre cette troisième surface 33. Les bagues 14, 15 sont placées en appui contre le doigt de poussée 26 par une face opposée de la jupe 22 du moyeu 12. L'inclinaison de la troisième surface 33 par rapport à un plan perpendiculaire à l'axe 23 d'allongement permet de décaler les bagues les unes par rapport aux autres le long de l'axe 23 d'allongement. Un tel décalage permet d'aboutir à un empilage progressif des bagues au moment où l'engrenage est sollicité. La deuxième surface d'appui 32 est inclinée par rapport à un plan perpendiculaire à l'axe 23. La lame ressort est noyée dans le moyeu et ce pour prendre le moins de place possible suivant l'architecture de la boite de vitesses

La troisième surface d'appui 33 est également inclinée par rapport au plan perpendiculaire à l'axe 23.

La deuxième surface 32 et la troisième surface 33 peuvent chacune être inclinée d'un angle qui est différent l'un de l'autre. La deuxième surface d'appui 32 est réalisée de telle manière que la patte radiale 18 épouse la forme de cette deuxième surface 32.

Le doigt de poussée 26 est calé radialement à l'intérieur du moyeu 12, dans une lumière 25 du moyeu 12. En effet, le doigt de poussée 26 présente une extrémité interne 41 et une extrémité externe 42. L'extrémité interne 41 est proche de l'axe 23 tandis que l'extrémité externe 42 est éloignée de ce même axe 23. L'extrémité interne 41 est de forme arrondie et épouse une forme correspondante du moyeu 12. En effet, le moyeu 12 forme à un emplacement du doigt de poussée 26 un renfoncement de forme arrondie en correspondance du doigt de poussée 26. L'extrémité externe 42 du doigt poussée 26 est placée en appui contre un rebord périphérique 43 du moyeu 12.

Dans un exemple non illustré, les bagues sont placées directement en appui élastiquement contre les pattes telles que 18 par la face opposée de la jupe 22 du moyeu 12. Les pattes 18 sont inclinées d'un angle permettant d'obtenir un décalage du positionnement des stators 14 et des rotors 15 les uns à la suite des autres le long de l'axe d'allongement 23. L'inclinaison des pattes 18 par rapport à un plan dans lequel s'étend l'anneau 30 dépend de la conception de la lame ressort à l'état libre puis comprimée. A titre indicatif, les pattes 18 sont inclinées d'un angle pouvant varier entre 15 et 25°.

Il est prévu d'incliner une surface périphérique externe 36 d'un fût 37 formé par le moyeu 12 autour duquel sont placées les bagues. La surface périphérique externe 36 forme un cône dont la section la plus petite est située proche du pignon fou 11 et dont la section la plus grande est située éloignée du pignon fou 11. La surface périphérique externe 36 du fût 37 est réalisée de telle manière qu'une surface périphérique interne 38 de la bague de plus petit diamètre destinée à être en regard de cette surface externe 36 est inclinée parallèlement à la surface périphérique externe 36 du fût 37.

De même, une surface périphérique interne 39 du manchon 16 est inclinée tout en formant un cône dont la plus grande section est placée éloignée du pignon fou 11 contrairement à la plus faible section qui est située proche du pignon fou 11. Une surface externe 40 de la bague de plus grand diamètre étant destinée à être placée au regard de la surface interne 39 du manchon 16 est inclinée parallèlement à l'inclinaison de la surface interne 39 du manchon 16.

Figure 6 est illustrée le couple C' obtenu entre le moyeu 12 et le pignon fou 11 en fonction d'une pression P' obtenue avec une boîte de vitesses équipée d'un dispositif de synchronisation 13 selon l'invention. On observe en A' que la pente formée au début de l'empilage des bagues du dispositif de synchronisation est toujours la même par rapport à celle obtenue pour les dispositifs de synchronisation de l'état de la technique (figure 1). On observe en B' que la zone de montée de passage de couple des bagues du dispositif de synchronisation 13 a changé. La montée de passage de couple est beaucoup plus progressive ce qui se traduit sur le graphique par une pente moins élevée que celle obtenue sur le graphique figure 1 avec une boite de vitesses équipée d'un dispositif de synchronisation de l'état de la technique.

## Revendications

1. - Boîte de vitesses, comprenant
- un arbre primaire (6) relié à un moteur (2) et un arbre secondaire (7) relié aux roues (5) du véhicule, ces deux arbres étant reliés entre eux par des engrenages (9) formant respectivement des rapports de vitesse, ces engrenages comportant chacun une roue (10) solidaire en rotation d'un des arbres et un pignon fou (11) monté sur l'autre arbre qui engrènent entre eux, et
- un moyeu (12) monté fixe en rotation sur l'arbre sur lequel est monté le pignon fou,
- un dispositif de synchronisation (13) pour synchroniser la vitesse de rotation de l'arbre primaire avec celle de l'arbre secondaire, le dispositif de synchronisation comprenant des bagues de friction coniques (14,15) disposées entre le moyeu et le pignon fou, lesdites bagues étant formées par un stator (14) lié en rotation au moyeu et par un rotor (15) lié en rotation au pignon fou, le stator et le rotor étant disposés concentriquement l'un à l'intérieur de l'autre, et le dispositif de synchronisation comprenant un manchon (16) en liaison glissière avec le moyeu, ce manchon permettant d'exercer un effort axial sur la bague de plus grand diamètre, afin de générer un couple par friction du stator et du rotor entraînant en rotation le pignon fou avec le moyeu,
- un dispositif élastique (17) permettant un accouplement progressif du stator avec le rotor, **caractérisée en ce que**
- le dispositif élastique forme une lame ressort (35), ladite lame ressort étant formée par une anneau plat (30) et par une patte (18) élastique radiale inclinée, ledit anneau étant placé autour de l'arbre sur lequel est placé le moyeu contre une face d'une jupe (22) formée par le moyeu et la patte radiale formant une surface d'appui (46) élastique qui s'étend à partir d'une périphérie (44) de l'anneau tout en étant logée dans une lumière traversante (25) formée au travers de la jupe du moyeu, les bagues étant placées en appui contre cette patte par une face opposée de la jupe du moyeu.

2. - Boîte de vitesses selon la revendication 1, **caractérisée en ce que** le dispositif élastique comporte également un doigt de poussée (26) situé entre les bagues et la lame ressort, la patte de la lame ressort étant logée en appui dans le doigt de poussée, ledit doigt de poussée formant une autre surface d'appui (33) inclinée contre laquelle sont placées en appui les bagues de friction.

3. - Boîte de vitesses selon l'une des revendications 1 à 2, **caractérisée en ce que** la lame ressort forme plusieurs pattes réparties régulièrement autour d'une périphérie externe (44) de l'anneau.

4. - Boîte de vitesses selon l'une des revendications 1 à 3, **caractérisée en ce que** la lame ressort comporte trois pattes élastiques coopérant avec les bagues de friction.

5. - Boîte de vitesses selon la revendication 4, **caractérisée en ce que** le dispositif élastique comporte autant de doigts de poussée que de pattes.

6. - Dispositif élastique d'une boîte de vitesses selon l'une des revendications 1 à 5, **caractérisé en ce qu'**il forme une lame ressort (35) formée par un anneau plat (30) et par une patte élastique (18) s'étendant radialement à une périphérie externe (44) de l'anneau, ladite patte formant une surface d'appui inclinée (46) contre laquelle sont placées en appui les bagues de friction.

7. - Dispositif élastique selon la revendication 6, **caractérisé en ce qu'**il comporte également un doigt de poussée (26) interposé entre la patte et les bagues, ledit doigt de poussée présentant une autre surface d'appui (33) inclinée contre laquelle sont placées en appui les bagues.

8. - Dispositif de synchronisation d'une boîte de vitesses selon l'une des revendications 1 à 7, comportant un dispositif élastique (17) selon l'une des revendications 6 à 7.
